# EUROPEAN PATENT APPLICATION

(11) **EP 4 513 287 A1**
(43) Date of publication of application: **26.02.2025**
(21) Application number: 24193231.8
(22) Date of filing: 07.08.2024
(51) Int. Cl.: G05B 19/425, B25J 9/16, B23K 10/00, B23K 9/067

(54) **ROBOT CONTROL DEVICE AND PLASMA CUTTING METHOD**

(30) Priority: 24.08.2023 JP 2023136093
(71) Applicant: DAIHEN Corporation, Yodogawa-ku Osaka-shi Osaka 532-8512 (JP)
(72) Inventor: TSUJIMURA, Hayato, Osaka, 532-8512 (JP)
(74) Representative: Manitz Finsterwald Patent- und Rechtsanwaltspartnerschaft mbB

(57) **Abstract**

Provided is a robot control device and a plasma cutting method that can shorten a takt time using a teaching program that appropriately moves a plasma cutting robot. The robot control device includes: a program reading unit that reads a teaching program to operate the plasma cutting robot; a program interpreting unit that interprets the teaching program which has been read; and a program executing unit that executes the teaching program that has been interpreted. In a case where the program interpreting unit interpreted an arc start instruction for plasma cutting in the teaching program, the program interpreting unit sets an arc start height of a torch in the plasma cutting robot included in the arc start instruction, using position information of the plasma cutting robot included in a move instruction generated after the arc start instruction.

## Description

### Background

### Field

The present invention relates to a robot control device and a plasma cutting method.

### Description of Related Art

A plasma cutting robot which performs plasma cutting normally cuts a work, i.e., cutting target, by moving a torch along a cutting line which is set in advance based on teaching. In the plasma cutting, the torch is moved to a pierce height and generates, with the work, an arc discharge with the work, whereby a pierce hole is penetrated, then the torch is moved to a cutting height and the work is cut. Here it is critical to move the torch appropriately to the pierce height and to the cutting height.

In a cutting operation control device for a cutting robot disclosed in Patent Publication JP-A-H7-88656, data indicating a distance between the pierce height and the cutting height is set as a cutting condition, and only a path to reach the cutting height is taught. In playback operation, the torch moves to the cutting height along the taught path to reach the cutting height, then moves to the pierce height by moving from the cutting height upward in the vertical direction by a distance indicated in the data of the cutting condition. In cutting operation, the torch moves downward in the vertical direction by a distance indicated in the data, and then cutting operation is executed.

### Summary

However, in the case of the cutting operation control device of the cutting robot disclosed in Patent Publication JP-A-H7-88656, only the path to the cutting height is taught, hence the torch has to move to the cutting heigh first, and then move to the pierce height using the cutting height as a reference, and as a result, the takt time becomes long.

With the foregoing in view, it is an object of the present invention to provide a robot control device and a plasma cutting method that can shorten the takt time by using a teaching program that appropriately moves the plasma cutting robot.

A robot control device according to an aspect of the present invention is a robot control device of a teaching-playback type controlling an operation of a plasma cutting robot programmed by teaching, the robot control device including: a program reading Unit configured to read a teaching program to operate the plasma cutting robot; a program interpreting unit configured to interpret the teaching program which has been read; and a program executing unit configured to execute the teaching program which has been interpreted. In a case where the program interpreting unit has interpreted a plasma cutting start instruction including an arc start condition for plasma cutting in the teaching program, the program interpreting unit sets an arc start height of a torch in the plasma cutting robot included in an arc start condition of the plasma cutting start instruction by using position information that has been taught in a move instruction generated after the plasma cutting start instruction.

According to this aspect, the program interpreting unit interprets the teaching program which has been read by the program reading unit, and in a case where the plasma cutting start instruction including the arc start condition is interpreted, the program interpreting unit sets the arc start height included in the arc start condition of the plasma cutting start instruction by using the position information that has been taught in the move instruction generated after the plasma cutting start instruction. Then the program executing unit executes the teaching program interpreted by the program interpreting unit. Therefore the takt time can be shortened using the teaching program which moves the plasma cutting robot appropriately. Further, the arc start height included in the arc start condition of the plasma cutting start instruction is set using the position information that has been taught in the move instruction, hence the plasma cutting start instruction including a common arc start condition can be used for the teaching program to be generated.

In the above aspect, the arc start height may be a cutting height of the torch in the plasma cutting robot, or an ignition height that is higher than the cutting height.

According to this aspect, the arc start height is appropriately set to the cutting height or the ignition height, hence the time for the plasma cutting robot (torch) to move to the arc height can be shortened, whereby the takt time can be shortened.

In the above aspect, a teaching device to cause a user to select either a first mode in which the cutting height and the ignition height are the same, or a second mode in which the cutting height and the ignition height are different from each other, may be included, and the teaching program may be generated such that the cutting height or the ignition height is set to the arc start height on the basis of the first mode or the second mode which has been selected.

According to this aspect, the user can select the first mode or the second mode using the teaching device, and based on this selection, the cutting height or the ignition height is set to the arc start height. Since the appropriate arc start height is set based on the selection by the user, the time for the plasma cutting robot (torch) to move to the arc start height can be shortened, whereby the takt time can be shortened. Furthermore, the ignition can be performed more appropriately by this arc start.

In this aspect, the first mode may be selected in a case where a cutting start position is an end face of a cutting target, and the second mode may be selected in a case where the cutting position is on a top plate of the cutting target.

According to this aspect, an appropriate arc start height is set depending on whether the cutting start position in the cutting target is an end face or on a top plate, hence ignition is performed more appropriately by this arc start.

In this aspect, display means for displaying, on a display region, either the first mode or the second mode in a manner in which he first mode and the second mode may be selectable by a user.

According to this aspect, the user can easily select an appropriate mode.

In this aspect, the display means may display, on the display region, the height information of the torch which moves in accordance with the first mode or the second mode selected by the user.

According to this aspect, the display means displays the height information of the torch which moves in accordance with the first mode or the second mode, hence the user can appropriately understand the transition of the height of the torch.

A plasma cutting method according to an aspect of the present invention is a plasma cutting method for a robot control device of a teaching-playback type controlling an operation of a plasma cutting robot programmed by teaching, the method including: a program reading step of reading a teaching program for operating the plasma cutting robot; a program interpreting step of interpreting the teaching program which has been read; and a program executing step of executing the teaching program which has been interpreted. In a case where a plasma cutting start instruction including an arc start condition for plasma cutting is interpreted in the teaching program in the program interpreting step, an arc start height of a torch in the plasma cutting robot included in an arc start condition of the plasma cutting start instruction, is set by using position information that has been taught in a move instruction generated after the plasma cutting start instruction.

According to this aspect, in the program interpreting step, the teaching program which has been read in the program reading step is interpreted, and in a case where the plasma cutting start instruction including the arc start condition is interpreted, the arc start height included in the arc start condition of the plasma cutting start instruction is set by using the position information that has been taught in the move instruction generated after the plasma cutting start instruction. Then in the program executing step, the teaching program interpreted in the program interpreting step is executed. Therefore the takt time can be shortened using the teaching program which moves the plasma cutting robot appropriately. Further, the arc start height included in the arc start condition of the plasma cutting start instruction is set using the position information that has been taught in the move instruction, hence the plasma cutting start instruction including a common arc start condition can be used for the teaching program to be generated.

According to the present invention, a robot control device and a plasma cutting method that can shorten the takt time using the teaching program for appropriately moving the plasma cutting robot, can be provided.

### Brief Description of Drawings

FIG. 1 is a schematic system diagram depicting a plasma cutting robot system 10 according to an embodiment of the present invention;
FIG. 2 is a functional block diagram depicting each function of a robot control device 100 according to an embodiment of the present invention;
FIG. 3 is diagram depicting an example of a teaching program PG to operate a plasma cutting robot 20;
FIG. 4 is a diagram depicting a state of a screen when the pierce type "end face" is selected in a case where the pierce position is the end face of the work;
FIG. 5 is a graph depicting a transition of the height of a torch 21 when the teaching program PG is executed in a case where the cutting start position is the end face of the work;
FIG. 6 is a diagram depicting a state of the screen when the pierce type "top plate" is selected in a case where the pierce position is on the top plate of the work;
FIG. 7 is a graph depicting a transition of the height of the torch 21 when the teaching program PG is executed in a case when the cutting start position is on the top plate of the work;
FIG. 8 is a graph depicting a transition of the height of the torch 21 when the teaching program PG is executed in a case where the cutting start position is on the top plate of the work and the plate thickness of the work is large; and
FIG. 9 is a flow chart depicting the processing flow of a plasma cutting method M100 executed by the robot control device 100 according to an embodiment of the present invention.

### Detailed Description

An embodiment of the present invention will now be described with reference to the drawings. The embodiment to be described below is merely an example to carry out the present invention, and is not intended to limit the interpretation of the present invention. To assist in understanding the description, same composing elements in the drawings are denoted with same reference signs as much as possible, and redundant description may be omitted in some cases.

### Embodiment

### Overview of Plasms Cutting Robot System

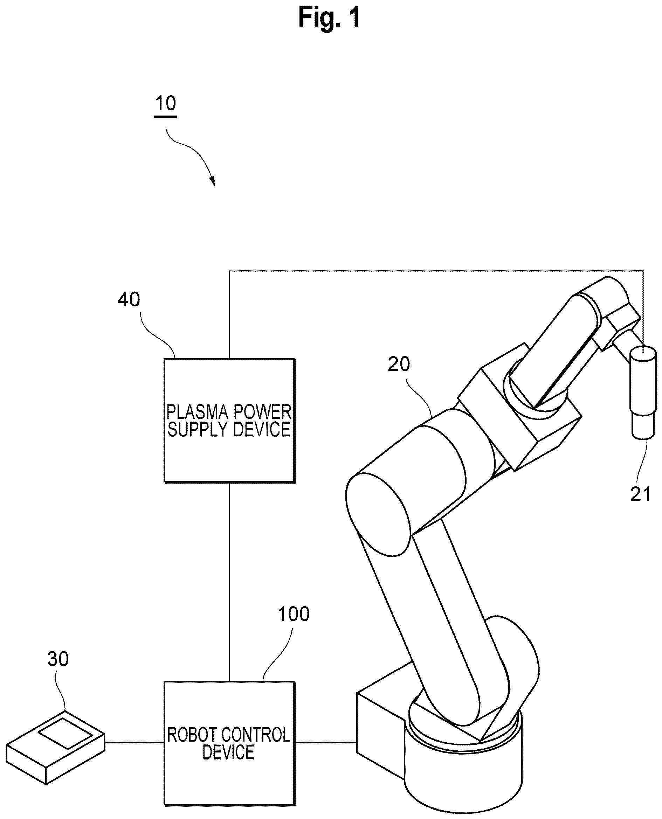

FIG. 1 is a schematic system diagram depicting a plasma cutting robot system 10 according to an embodiment of the present invention. As illustrated in FIG. 1, the plasma cutting robot system 10 includes a plasma cutting robot 20, a teach pendant 30, a plasma power supply device 40, and a robot control device 100.

The plasma cutting robot 20 is connected to the robot control device 100 via a cable, and performs plasma cutting based on operation instructions from the robot control device 100. The plasma cutting robot 20 includes a torch 21 disposed at an arm tip, and performs plasma cutting by generating an arc [discharge] from the tip of the torch 21 to a cutting target metal material (work).

The torch 21 is connected to the plasma power supply device 40 via a cable, and receives voltage and current supplied therefrom. In the case of plasma cutting, when the torch 21 is instantaneously contacted with the metal material and energized, an arc discharge is generated between the tip of the torch 21 and the metal material, and the metal material is dissolved by the heat of the generated arc, whereby plasma cutting is performed.

The teach pendant 30 receives input, from an operator who performs the plasma cutting operation, on plasma cutting related teaching information about the plasma cutting robot 20. The operator inputs optimum plasma cutting related teaching information using the teach pendant 30 while checking the state of the arc.

The plasma cutting related teaching information here refers to information related to the plasma cutting performed by the plasma cutting robot 20, and includes teaching information to teach the operation of the plasma cutting robot 20, plasma cutting conditions, and the like. The teaching information of the plasma cutting robot 20 includes information on the operation of an arm of the plasma cutting robot 20, information on a position and attitude of the plasma cutting robot 20, information on the tip of the torch 21, and the like. The plasma cutting conditions include arc voltage to be applied to the torch 21, arc current that flows through the torch 21, cutting speed which indicates the moving speed of the torch 21 in the cutting direction during cutting, and the like.

The robot control device 100 is an apparatus to control the plasma cutting robot 20. The robot control device 100 is connected to the teach pendant 30, and can acquire plasma cutting related teaching information that is inputted to the teach pendant 30. The robot control device 100 controls the plasma cutting robot 20 and the plasma power supply device 40 based on this plasma cutting related teaching information.

The plasma power supply device 40 is connected to the plasma cutting robot 20 via a cable, and supplies arc voltage and arc current to the torch 21 of the plasma cutting robot 20 based on the instructions received from the robot control device 100.

In FIG. 1, the teach pendant 30 is connected to the robot control device 100 via a cable, but may be connected thereto wirelessly. In other words, each of the teach pendant 30 and the robot control device 100 may include a communication unit to perform wireless communication. If the robot control device 100 and the teach pendant 30 are wirelessly connected, the operator can input the plasma cutting related teaching information while freely moving around, without being concerned with a cable and being restricted to the moving range due to cable length.

### Configuration of Robot Control Device

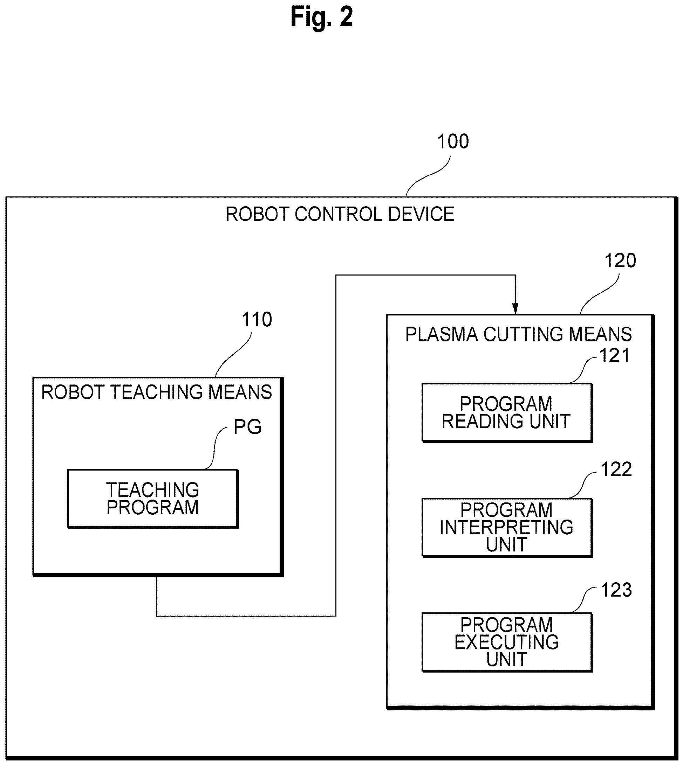

FIG. 2 is a functional block diagram depicting each function of the robot control device 100 according to an embodiment of the present invention. As indicated in FIG. 2, the robot control device 100 includes robot teaching means 110 and plasma cutting means 120, and operates the plasma cutting robot 20 to perform plasma cutting by the plasma cutting means 120 executing a teaching program PG generated by the robot teaching means 110. The robot control device 100 is a teaching-playback type robot control device which controls the operation of the plasma cutting robot 20 programmed by teaching.

The robot teaching means 110 generates a teaching program by teaching operation to the plasma cutting robot 20. For example, using an operation apparatus (teaching device), such as the teach pendant 30, the operator sets the plasma cutting conditions, or registers teaching points while operating the plasma cutting robot 20, whereby the teaching program PG is generated.

The plasma cutting means 120 operates the plasma cutting robot 20 in accordance with the teaching program PG. The plasma cutting means 120 includes a program reading unit 121, a program interpreting unit 122, and a program executing unit 123.

The program reading unit 121 reads the teaching program PG to operate the plasma cutting robot 20, and the program interpreting unit 122 interprets the teaching program PG which was read by the program reading unit 121. The teaching program PG includes mainly an arc start instruction (AS), a move instruction (MOVE), and an arc end instruction (AE).

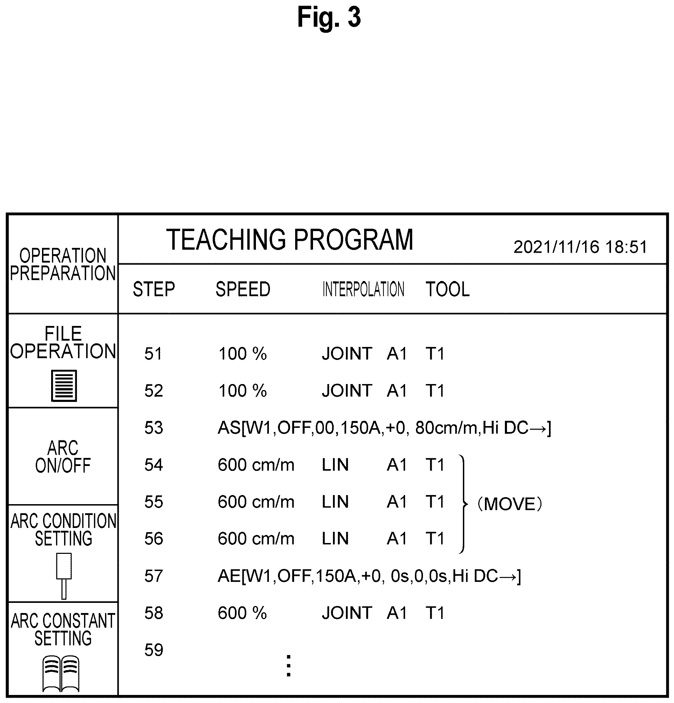

FIG. 3 is a diagram depicting an example of the teaching program PG to operate the plasma cutting robot 20. As indicated in FIG. 3, the teaching program PG includes the arc start instruction (AS), the move instruction (MOVE), and the arc end instruction (AE). Here the move instruction (MOVE) is indicated as a linear move instruction (LIN).

Specifically, the arc start instruction (AS) includes processing instructions to move the torch 21 to a position to start arc (arc start height), to turn arc ON (ignite), and to perform piercing (penetrate a pierce hole). The arc start instruction may also include a moving speed of the torch 21 in this processing, arc voltage and/or arc current, and time required to penetrate the pierce hole (pierce delay). These values are appropriately set in accordance with the material, thickness, and the like of the work, and are taught by the robot teaching means 110. The position of the torch 21 to start arc (arc start height) however is set based on the cutting height, and the details thereof will be described later.

The move instruction (MOVE) includes processing to move the torch 21 above the work in an approximately horizonal direction in the state of generating the arc, so as to cut the work. Here the move instruction (MOVE) is indicated as a plurality of linear move instructions (LIN), but the move invention is not limited thereto, and may be a circular arc move instruction (CIR), for example, or may be a combination thereof. The move instruction may include the position to which the torch 21 is moved, height position of the torch 21 from the work (cutting height), moving speed of the torch 21, and arc voltage and/or arc current in this moving, and these values are appropriately set in accordance with the material, thickness, and the like of the work, and are taught by the robot teaching means 110.

Here the cutting height is set appropriately in accordance with the material, thickness, and the like of the work, and has been taught by the robot teaching means 110. The above mentioned arc start height is set based on this cutting height in the move instruction (MOVE). For example, in the arc start instruction (AS), the cutting height in the move instruction (MOVE) is referred to, and a predetermined height is added to this cutting height, then this value is set as the arc start height. The predetermined height added to the cutting height may be set in advance in accordance with the material, thickness, and the like of the work.

The arc end instruction (AE) includes processing to end the arc.

The teaching program PG interpreted by the program interpreting unit 122 like this is executed by the program executing unit 123. Particularly, in the case of the arc start instruction (AS), the program interpreting unit 122 sets an arc start height included in the arc start instruction (AS), based on the cutting height included in the move instruction (MOVE) generated after the arc start instruction (AS).

Here the arc start height included in the arc start instruction (AS) is set based on the cutting height included in the move instruction (MOVE) of the teaching program PG, hence if the move instruction (MOVE) including the cutting height is generated, the teaching program PG can be generated using a common arc start instruction (AS), without changing the arc start instruction (AS).

Further, it is preferable that the arc start height is set to an appropriate height based not only on the material, thickness and the like of the work, but also on the cutting start position (that is, the pierce position). Specifically, the arc start height that is set is different between the case where the cutting start position (pierce position) is an end face of the work, and the case where the cutting start position is on the top plate of the work.

### Setting of Torch Height

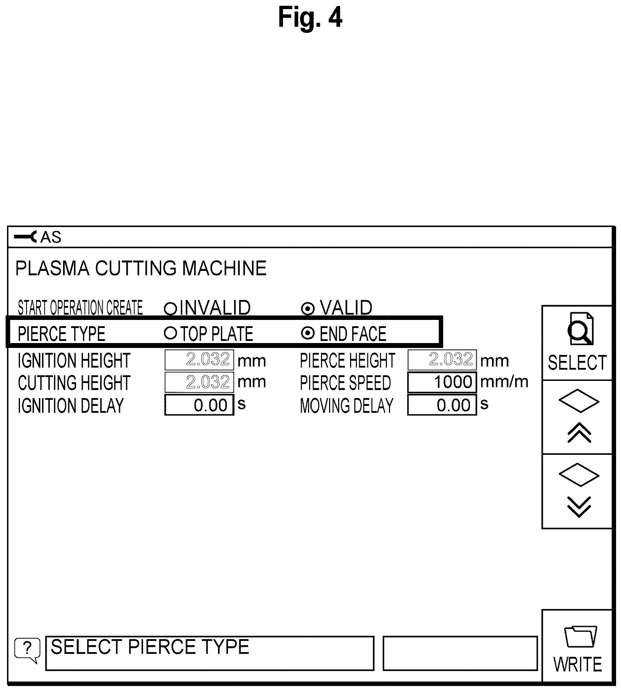

FIG. 4 is a diagram depicting a state of the screen when the pierce type "end face" is selected in the case where the pierce position is the end face of the work. As indicated in FIG. 4, on the screen operated by the user, "end face" is selected by a radio button, out of the pierce types "top plate' and "end face" (display means).

For example, when the operator sets the plasma cutting conditions using an operation apparatus (teaching device), such as the teach pendant 30, or registers the teaching points and the like while operating the plasma cutting robot 20, the display means displays such a screen as the one indicated in FIG. 4 on the teaching device. Then in the case where the cutting start position of the cutting target work is the end face of the work, the operator can simply select the piece type "end face".

In the case where the cutting start position is the end face of the work, the position of the torch 21 to start the arc (arc start height) may be the same as the cutting height, that is, the arc may be turned ON (ignited) at the cutting height (first mode).

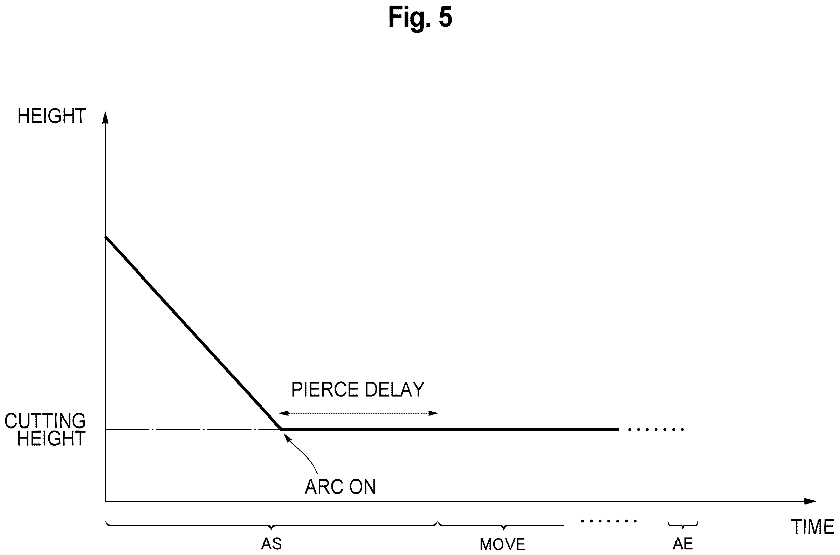

FIG. 5 is a graph depicting a transition of the height of the torch 21 when the teaching program PG is executed in the case where the cutting start position is the end face of the work. As indicated in FIG. 5, the height of the torch 21 becomes the cutting height when the arc start instruction (AS) is generated, and then the arc is turned ON and the pierce hole is penetrated in the pierce delay period. Then while the height of the torch 21 is maintained at the cutting height, the torch 21 is moved by the move instruction (MOVE), whereby the work is cut, and the arc end instruction (AE) is executed.

In the case where the pierce type "end face" is selected, the teaching program PG may be generated such that the cutting height included in the move instruction (MOVE) is set to the arc start height included in the arc start instruction (AS).

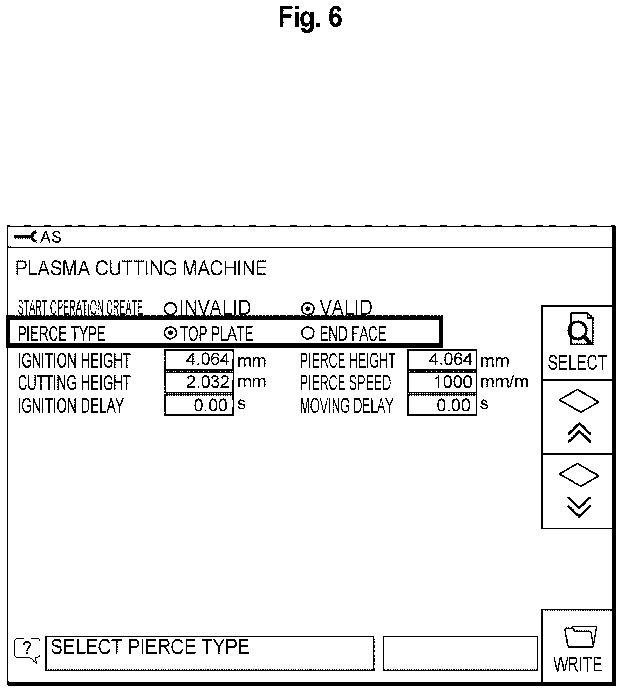

FIG. 6 is a diagram depicting a state of the screen when the pierce type "top plate" is selected in the case where the pierce position is on the top plate of the work. As indicated in FIG. 6, on the screen operated by the user, "top plate" is selected by a radio button, out of the pierce types "top plate" and "end face" (display means).

For example, when the operator sets the plasma cutting conditions using an operation apparatus (teaching device), such as the teach pendant 30, or registers the teaching points and the like while operating the plasma cutting robot 20, the display means displays such a screen as the one indicated in FIG. 6 on the teaching device. Then in the case where the cutting start position of the cutting target work is on the top plate of the work, the operator can simply select the pierce type "top plate".

In the case where the cutting start position is on the top plate of the work, the position of the torch 21 to start the arc (arc start height) may be set to a height different from the cutting height, that is, the arc may be turned ON (ignited) at an ignition height that is higher than the cutting height (second mode).

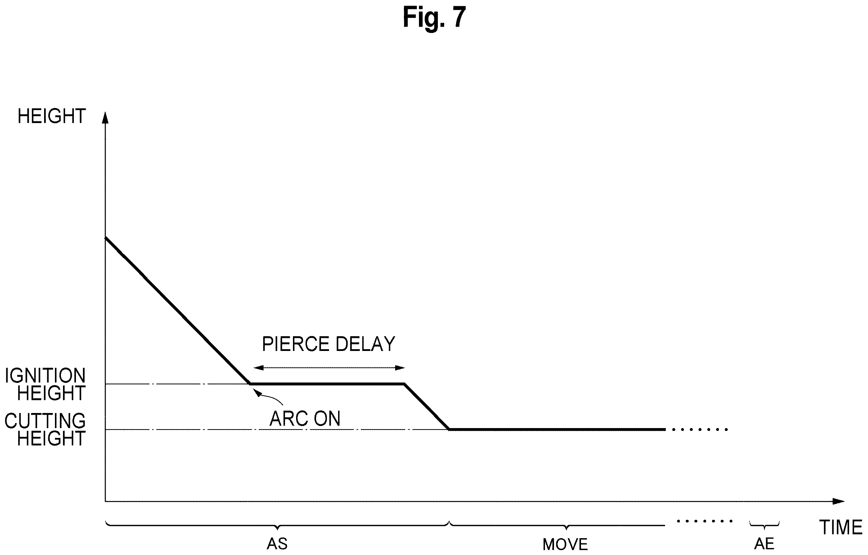

FIG. 7 is a graph depicting a transition of the height of the torch 21 when the teaching program PG is executed in a case where the cutting start position is on the top plate of the work. As indicated in FIG. 7, the height of the torch 21 becomes the ignition height that is higher than the cutting height when the arc start instruction (AS) is generated, and then the arc is turned ON, and the pierce hole is penetrated in the pierce delay period. Then the height of the torch 21 becomes the cutting height, and while maintaining this cutting height, the torch 21 is moved by the move instruction (MOVE), whereby the work is cut, and the arc end instruction (AE) is executed.

In the case where the pierce type "top plate" is selected, the teaching program PG may be generated such that the ignition height, determined by adding a predetermined height to the cutting height included in the move instruction (MOVE), is set to the arc start height included in the arc start instruction (AS).

As mentioned above, in the teaching program PG, the arc start height included in the arc start instruction (AS) is different between the case where the cutting start position is the end face of the work (FIG. 4 and FIG. 5), and the case where the cutting start position is on the top plate of the work (FIG. 6 and FIG. 7), but is set based on the cutting height included in the move instruction (MOVE) after generating the arc start instruction (AS) in either case. By selecting the pierce type "end face" or "top plate", an appropriate arc start height can be set in a common arc start instruction (AS).

Further, in the case where the cutting start position of the work is on the top plate of the work and the plate thickness of the work is large (e.g. 40 mm or more), a different height of the torch 21 may be set between the ignition height at which arc is turned ON (ignition), and the pierce height in the pierce delay period until the pierce hole is penetrated.

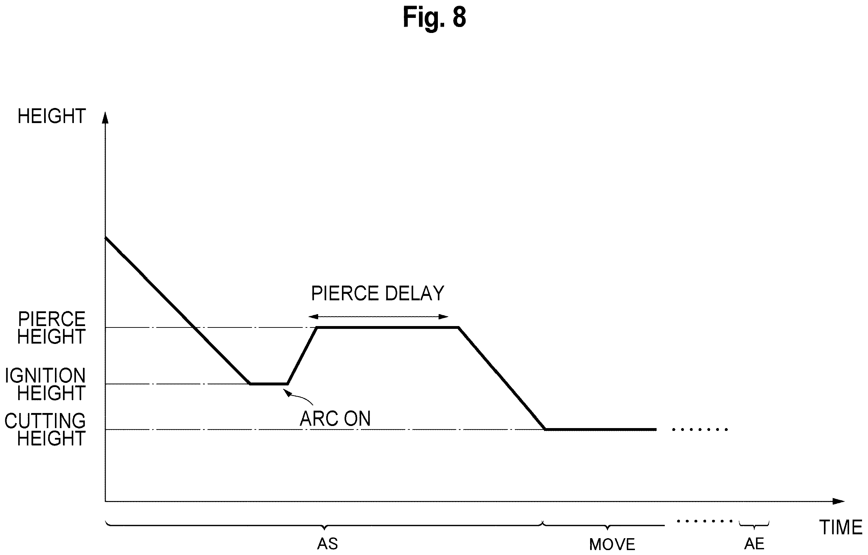

FIG. 8 is a graph depicting a transition of the height of the torch 21 when the teaching program PG is executed in the case where the cutting start position is on the top plate of the work and the plate thickness of the work is large. As indicated in FIG. 8, the height of the torch 21 becomes the ignition height that is higher than the cutting height when the arc start instruction (AS) is generated, and then the arc is turned ON, and the height of the torch 21 becomes the pierce height that is even higher than the ignition height, then the pierce hole is generated in the pierce delay period. Then the height of the torch 21 becomes the cutting height, and while maintaining this cutting height, the torch 21 is moved by the move instruction (MOVE), whereby the work is cut, and the arc end instruction (AE) is executed.

In the case where the pierce type 'top plate" is selected, the teaching program PG may be generated such that the ignition height, which is determined by adding a predetermined height to the cutting height included in the move instruction (MOVE), is set to the arc start height included in the arc start instruction (AS), and the pierce height, which is determined by further adding a predetermined height in accordance with the plate thickness of the work to the ignition height, is set.

For the pierce height, an appropriate height has been recorded in advance in accordance with the plate thickness of the work, and the pierce height may be set by the operator inputting the plate thickness of the cutting target work on such a screen as the one indicated in FIG. 4 or FIG. 6, using an operation apparatus (teaching device), such as the teach pendant 30.

On the screen indicated in FIG. 4 or FIG. 6, the display means may display concrete values of the cutting height, the ignition height, the pierce height and the like, which are set in accordance with the selection (e.g. pierce type) or input (e.g. plate thickness of the work) by the operator, so that the operator can check the values. Further, the items to be displayed are not limited to these, but the pierce speed, ignition delay, move delay and the like may be displayed, for example.

### Plasma Cutting Method

The method for plasma-cutting a cutting target work by operating the plasma cutting robot according to the teaching program will be described next in detail.

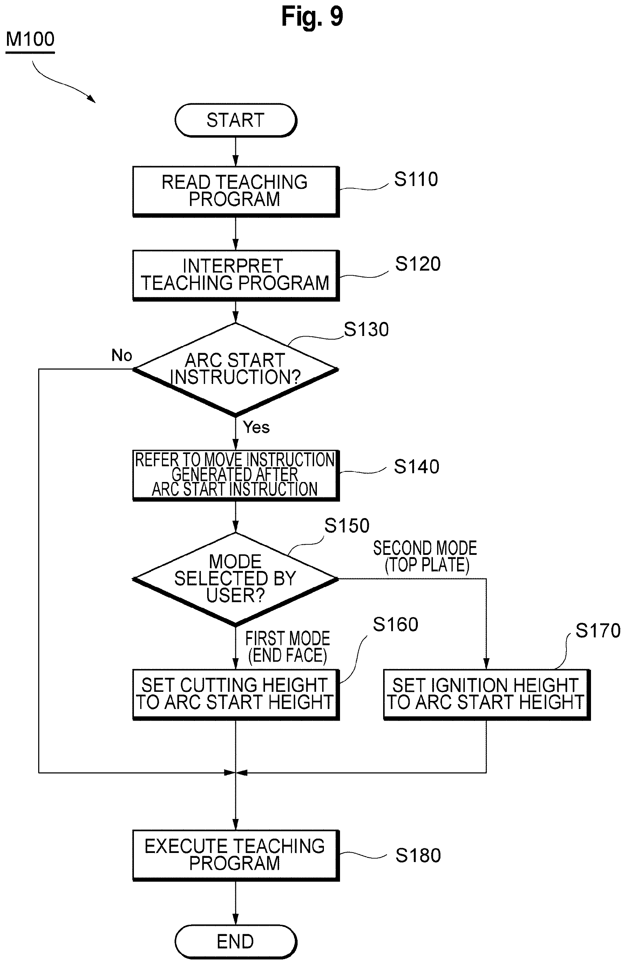

FIG. 9 is a flow chart depicting a processing flow of the plasma cutting method M100 executed by the robot control device 100 according to an embodiment of the present invention. As indicated in FIG. 9, the plasma cutting method M100 includes steps S110 to S180, and each step is executed by a processor included in the robot control device 100.

In step S110, the robot control device 100 reads the teaching program to operate the plasma cutting robot 20 (program reading step). Specifically, the program reading unit 121 reads the teaching program PG that the robot teaching means 110 taught and generated.

In step S120, the robot control device 100 interprets the teaching program (program interpreting step). Specifically, the program interpreting unit 122 interprets the teaching program PG which was read in step S110, for each instruction included in this teaching program PG, for example.

In step S130, the robot control device 100 determines whether each instruction included in the teaching program PG is the arc start instruction (program interpreting step). Specifically, the program interpreting unit 122 interprets each instruction included in the teaching program PG, and processing advances to step S140 if this instruction is the arc start instruction ("Yes" in step S130), or processing advances to step S180 if this instruction is not the arc start instruction ("No" in step S130).

In step S140, the robot control device 100 refers to the move instruction generated after the arc start instruction (program interpreting step). Specifically, the program interpreting unit 122 acquires the cutting height included in the move instruction generated after the arc start instruction.

In step S150, the robot control device 100 determines the mode selected by the user (program interpreting step). Specifically, when the robot teaching means 110 teaches the operation of the plasma cutting robot 20, the program interpreting unit 122 interprets which mode the operator selected using an operation apparatus (teaching device), such as the teach pendant 30. For example, processing advances to step S160 if "end face (first mode)" is selected as the cutting start position (pierce position) of the work on the screen indicated in FIG. 4, or processing advances to step S170 if "top plate (second mode)" is selected as the cutting start position (pierce position) of the work.

In step S160, the robot control device 100 sets the cutting height to the arc start height (program interpreting step). Specifically, the program interpreting unit 122 sets the cutting height acquired in step S140, as the arc start height included in the arc start instruction.

In step S170, the robot control device 100 sets the ignition height to the arc start height (program interpreting step). Specifically, the program interpreting unit 122 sets the ignition height, which is determined by adding a predetermined height to the cutting height acquired in step S140, as the arc start height included in the arc start instruction.

In step S180, the robot control device 100 executes the teaching program (program executing step). Specifically, the program executing unit 123 executes the teaching program PG interpreted in steps S120 to S170. Then the robot control device 100 plasma-cuts the cutting target work by operating the plasma cutting robot 20 in accordance with the teaching program PG.

As described above, according to the robot control device 100 and the plasma cutting method M100 of an embodiment of the present invention, the program reading unit 121 reads the teaching program PG which the robot teaching means 110 taught and generated, and the program interpreting unit 122 interprets this teaching program PG. When the arc start instruction (AS) included in the teaching program PG is interpreted, the program interpreting unit 122, based on the cutting height included in the move instruction (MOVE) generated after this arc start instruction (AS), sets an appropriate height as the arc start height included in the arc start instruction (AS) in accordance with the mode which the operator selected using the teaching device. Therefore the takt time can be shortened using the teaching program PG, which moves the plasma cutting robot 20 appropriately. Further, the arc start height included in the arc start instruction (AS) is set using the cutting height included in the move instruction (MOVE), hence the common arc start instruction (AS) can be used for the teaching program PG to be generated.

In the present embodiment, on such a screen as the one indicated in FIG. 4 or FIG. 6, specific values of the cutting height, the ignition height, the pierce height, and the like, which are set in accordance with the selection or input by the operator, are displayed, but the present invention is not limited to this example. For example, along with the screen indicated in FIG. 4 or FIG. 6, or as an independent screen, a graph indicating the transition of the height of the torch 21, as indicated in FIG. 5, 7 or 8, may be displayed. Then as the operator performs the selection (e.g. pierce type) or input (e.g. plate thickness of the work), the operator can recognize the transition of the height of the torch 21 visually and intuitively.

In the present embodiment, for the arc start height, the cutting height is set in the case where the cutting start position is the end face of the work, the ignition height which is higher than the cutting height is set in the case where the cutting start position is on the top plate of the work, and the pierce height which is higher than the ignition height is set in the case where the plate thickness of the work is large, but the present invention is not limited to this example. For example, an appropriate ignition height and pierce height may be set in accordance with various conditions, including the type and size of the work, the cutting start position, and the type and performance of the plasma cutting robot 20.

In the present embodiment, the teaching program PG, mainly configured by the arc start instruction (AS), the move instruction (MOVE), and the arc end instruction (AE) has been described, but the configuration of the teaching program PG is not limited to this example. For example, the teaching program may constitute a plasma cutting start instruction including an arc start condition for plasma cutting, or may constitute a plasma cutting start instruction including the arc start instruction (AS). An instruction may be one instruction or may be constituted of a plurality of instructions (arc start instruction and plasma cutting instruction = plasma cutting start instruction).

The above described embodiment is for assisting understanding of the present invention, and is not for limiting interpretation of the present invention. Each element of the embodiment, and the position, material, condition, shape, size, and the like thereof are not limited to those of the embodiment, but may be appropriately changed. Composing elements indicated in the examples in the embodiment may be partially replaced or combined with each other.

## Claims

1. A robot control device (100) of a teaching-playback type controlling an operation of a plasma cutting robot (20) programmed by teaching, the robot control device (100) comprising:
a program reading unit (121) configured to read a teaching program (PG) to operate the plasma cutting robot (20);
a program interpreting unit (122) configured to interpret the teaching program (PG) which has been read; and
a program executing unit (123) configured to execute the teaching program (PG) which has been interpreted, wherein
in a case where the program interpreting unit (122) has interpreted a plasma cutting start instruction including an arc start condition for plasma cutting in the teaching program (PG), the program interpreting unit (122) sets an arc start height of a torch (21) in the plasma cutting robot (20) included in an arc start condition of the plasma cutting start instruction by using position information that has been taught in a move instruction generated after the plasma cutting start instruction.

2. The robot control device (100) according to claim 1, wherein
the arc start height is a cutting height of the torch (21) in the plasma cutting robot (20), or an ignition height that is higher than the cutting height.

3. The robot control device (100) according to claim 2, further comprising
a teaching device (30) configured to cause a user to select either a first mode in which the cutting height and the ignition height are the same, or a second mode in which the cutting height and the ignition height are different from each other, wherein
the teaching program (PG) is generated such that the cutting height or the ignition height is set to the arc start height on the basis of the first mode or the second mode which has been selected.

4. The robot control device (100) according to claim 3, wherein
the first mode is selected in a case where a cutting start position is an end face of a cutting target, and
the second mode is selected in a case where a cutting start position is on a top plate of a cutting target.

5. The robot control device (100) according to claim 3, further comprising display means for displaying, on a display region, either the first mode or the second mode in a manner in which either the first mode or the second mode is selectable by the user.

6. The robot control device (100) according to claim 5, wherein
display means displays, on the display region, height information of the torch, which moves in accordance with the first mode or the second mode selected by the user.

7. A plasma cutting method (M100) for a robot control device (100) of a teaching-playback type controlling an operation of a plasma cutting robot (20) programmed by teaching, the method (M100) comprising:
a program reading step (S110) of reading a teaching program (PG) for operating the plasma cutting robot (20);
a program interpreting step (S120) of interpreting the teaching program (PG) which has been read; and
a program executing step (S180) of executing the teaching program which has been interpreted, wherein
in a case where a plasma cutting start instruction including an arc start condition for plasma cutting is interpreted in the teaching program (PG) in the program interpreting step (S120), an arc start height of a torch (21) in the plasma cutting robot (20) included in an arc start condition of the plasma cutting start instruction, is set by using position information that has been taught in a move instruction generated after the plasma cutting start instruction.
